Europäisches Patentamt

European Patent Office

Office européen des brevets

(19)

(11) Veröffentlichungsnummer: **0 082 924**
**B1**

(12) **EUROPÄISCHE PATENTSCHRIFT**

(45) Veröffentlichungstag der Patentschrift:
**23.10.85**

(51) Int. Cl.⁴: **C 01 B 33/28**

(21) Anmeldenummer: **82107927.4**

(22) Anmeldetag: **28.08.82**

(54) **Verfahren zur Herstellung von grobkörnigem Mordenit.**

(30) Priorität: **21.11.81 DE 3146153**
**01.04.82 DE 3212106**

(43) Veröffentlichungstag der Anmeldung:
**06.07.83 Patentblatt 83/27**

(45) Bekanntmachung des Hinweises auf die Patenterteilung:
**23.10.85 Patentblatt 85/43**

(84) Benannte Vertragsstaaten:
**AT BE CH DE FR GB IT LI LU NL SE**

(56) Entgegenhaltungen:
**EP - A - 0 040 104**
**DD - A - 71 756**
**DE - B - 2 055 476**
**DE - C - 1 176 106**
**US - A - 3 849 463**
**US - A - 4 081 514**
**US - A - 4 205 052**

(73) Patentinhaber: **Degussa Aktiengesellschaft,**
**Weissfrauenstrasse 9, D-6000 Frankfurt am Main 1 (DE)**

(72) Erfinder: **Baacke, Michael, Dr., Grünaustrasse 19,**
**D-6450 Hanau 9 (DE)**
Erfinder: **Kleinschmit, Peter, Dr., Wildaustrasse 19,**
**D-6450 Hanau 9 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Mordenit weist, wenn er nach bekannten Verfahren hergestellt worden ist, überwiegend Teilchen in der Größe von 6 bis 12 µm auf. Für die Verwendung als Katalysator muß daher dieses Pulver entweder bei der Herstellung oder nachträglich verformt werden (vgl. DE-PS 1 176 106 und DE-AS 2 055 476). Weiterhin ist es aus der US-PS 4 205 052 bekannt, während der Kristallisation die Kristallform des Mordenits durch Zugabe von organischen Verbindungen zu beeinflussen.

Diese bekannten Verfahren weisen den Nachteil auf, daß sie entweder weitere Verfahrensschritte oder teure Einsatzstoffe erfordern.

Gegenstand der Erfindung ist ein Verfahren zur Herstellung von grobkörnigem Mordenit, welches dadurch gekennzeichnet ist, daß man eine Reaktionsmischung, hergestellt aus Aluminatlauge, Kieselsäure, Natriumchlorid-Lösung, Natriumhydroxid-Lösung und Wasser und die die Zusammensetzung

$2,5-10 \, Na_2O \cdot Al_2O_3 \cdot 15-35 \, SiO_2$;
$40-4000 \, H_2O \cdot 5-30 \, NaCl$,

insbesondere

$6,5 \, Na_2O \cdot Al_2O_3-30 \, SiO_2-1400 \, H_2O \cdot 20 \, NaCl$

aufweist, in einem Autoklaven bei Temperaturen von 140 bis 180°C bis zur Bildung von Kristallen umsetzt, das kristalline Produkt abtrennt, mit Wasser wäscht und trocknet.

Das erfindungsgemäße Verfahren führt überraschenderweise mit preiswerten Ausgangsstoffen zu grobkörnigen Produkten. Das Verfahren beruht auf der Zugabe eines großen Überschusses an NaCl bei sonst unveränderter Zusammensetzung der Synthesemischung. Es können ca. 5—30, vorzugsweise 20 Mol NaCl/Mol $Al_2O_3$ eingesetzt werden.

Die Zugabe von NaCl zur Synthesemischung wurde zwar schon in J. Chem. Soc. 1952, 1561 beschrieben, jedoch wurde stets der technisch bedeutungslose Sodalith erhalten.

Aus Adv. Chem. Ser. 121, 140 (1973) sowie der DD-A-71 756 ist es bekannt, daß durch die Zugabe von NaCl zur Kristallisationsmischung von Zeolithen, eine starke Viskositätserhöhung und somit eine drastische Senkung der Kristallisationsgeschwindigkeit erreicht wird.

Aus der US-PS 4 081 514 ist es bekannt, Mordenit mit gröberen Teilchen in Gegenwart von NaCl herzustellen. Dabei werden jedoch zum einen Impfkristalle und zum anderen grobe amorphe $SiO_2/Al_2O_3$-Partikel, die die gleiche Größe wie die Produktpartikel aufweisen, eingesetzt.

Im Gegensatz dazu wird bei dem erfindungsgemäßen Verfahren eine Reaktionsmischung, die keine Impfkristalle oder vorgeformte Partikel aufweist, verwendet.

Durch die Zugabe von NaCl wird ein sehr gut kristalliner Mordenit mit Teilchengrößen zwischen 20 µm und 300 µm erhalten. Die dabei erhaltenen Aggregate bestehen aus fest miteinander verwachsenen Kristalliten.

Bei dem erfindungsgemäßen Verfahren kann handelsübliches Aluminat der Zusammensetzung 50% $Al_2O_3$, 40% $Na_2O$, 10% $H_2O$, welches in Form seiner wäßrigen Lösung beliebiger Konzentration verwendet wird, eingesetzt werden.

Als Kieselsäure kann man gefällte oder pyrogen hergestellte Kieselsäure verwenden.

Der mittels dem erfindungsgemäßen Verfahren erhaltene grobkörnige Mordenit kann z. B. als Katalysator bei der Isomerisierung von Kohlenwasserstoffen eingesetzt werden.

Das erfindungsgemäße Verfahren wird anhand der folgenden Beispiele näher erläutert:

### Beispiel 1

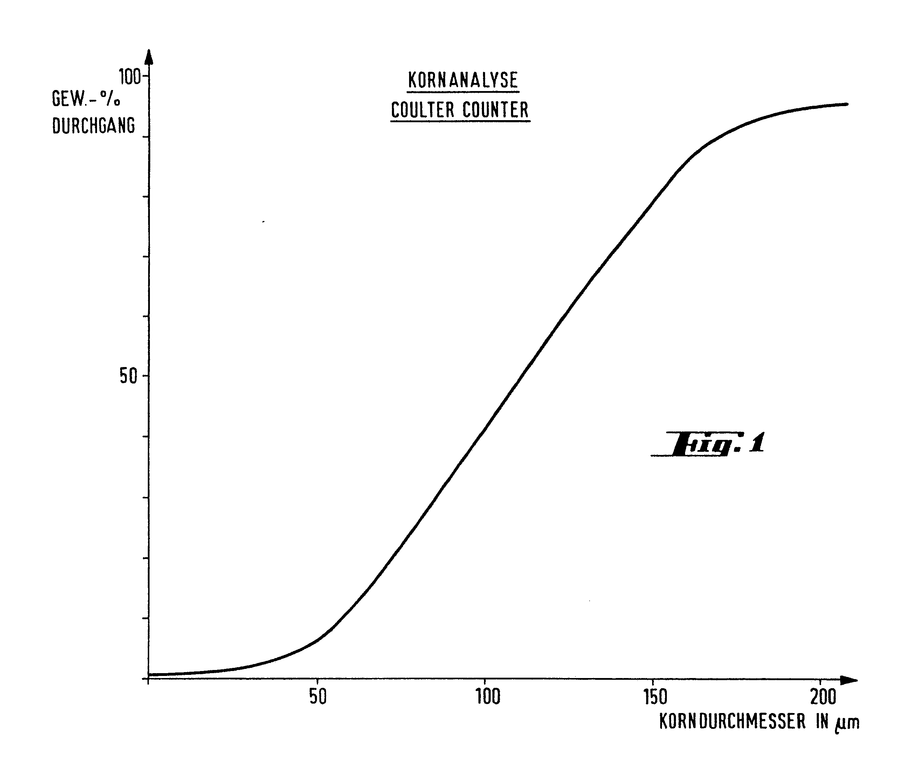

7,5 g Natriumaluminat (50% $Al_2O_3$, 40% $Na_2O$, 10% $H_2O$) werden in 20 ml $H_2O$ gelöst und zu einer Suspension von 75 g einer gefällten Kieselsäure (89% $SiO_2$) in einer Lösung von 35,5 g NaCl und 15 g NaOH in 780 ml $H_2O$ gegeben. Die so hergestellte Mischung wird 3 Tage bei 150°C im Autoklaven gerührt, das kristalline Produkt wird abgetrennt, mit Wasser gewaschen und 12 h bei 120°C getrocknet. Nach dem Röntgenbeugungsdiagramm handelt es sich um gut kristallinen Mordenit, dessen Korngrößenverteilung aus Figur 1 hervorgeht.

### Beispiel 2 (Vergleichsbeispiel)

Das Verfahren von Beispiel 1 wird mit dem Unterschied, daß kein NaCl zugegeben wurde, wiederholt. Als Produkt wird gut kristallisierter Mordenit erhalten.

Eine Coulter-Counter-Messung ist auf Grund der Feinteiligkeit des Produktes nicht möglich.

Die unterschiedlichen Teilchengrößen können weiterhin den REM-Aufnahmen entnommen werden.

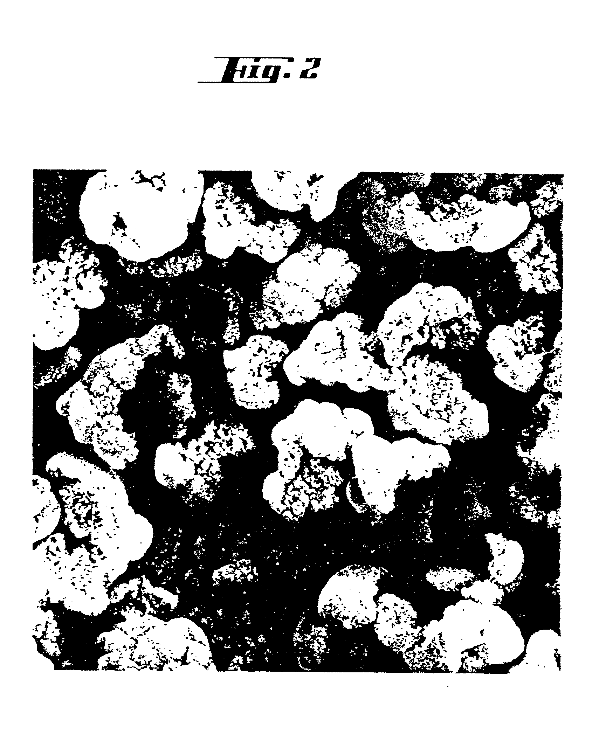

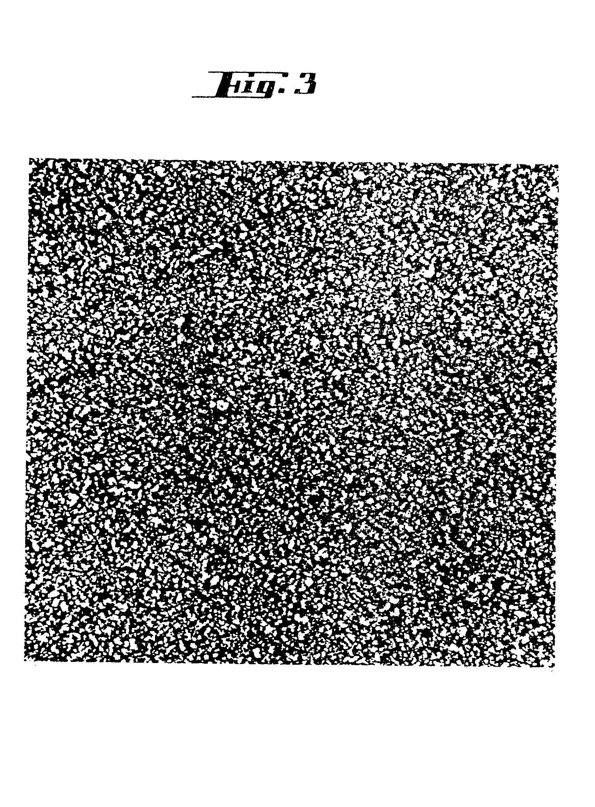

Es zeigen Abb. 2 das Produkt gemäß Beispiel 1 und Abb. 3 das Produkt gemäß Beispiel 2.

## Patentanspruch

Verfahren zur Herstellung von grobkörnigem Mordenit, dadurch gekennzeichnet, daß man eine Reaktionsmischung, hergestellt aus Aluminatlauge, Kieselsäure, Natriumchlorid-Lösung, Natriumhydroxid-Lösung und Wasser und die die Zusammensetzung

$2,5-10 \, Na_2O \cdot Al_2O_3 \cdot 15-35 \, SiO_2$;
$40-4000 \, H_2O \cdot 5-30 \, NaCl$,

insbesondere

$6,5 \, N_2O \cdot Al_2O_3-30 \, SiO_2-1400 \, H_2O \cdot 20 \, NaCl$

aufweist, in einem Autoklaven bei Temperaturen von 140 bis 180°C bis zur Bildung von Kristallen umsetzt, das kristalline Produkt abtrennt, mit Wasser wäscht und trocknet.

## Claim

A process for the production of coarse-grained mordenite, characterised in that a reaction mixture, produced from an aluminate liquor, silica, sodium chloride solution, sodium hydroxide solution and water and having the composition

$2.5 - 10\, Na_2O \cdot Al_2O_3 \cdot 15 - 35\, SiO_2$;

$40 - 4000\, H_2O \cdot 5 - 30\, NaCl$,

particularly

$6.5\, N_2O \cdot Al_2O_3 - 30\, SiO_2 - 1400\, H_2O \cdot 20\, NaCl$,

is reacted in an autoclave at a temperature of from 140 to 180°C until crystals are formed, the crystalline product is separated off, washed with water and dried.

## Revendication

Procédé pour la production de mordénite à gros grains, caractérisé par le fait que l'on fait réagir dans un autoclave à des températures comprises entre 140 et 180°C mélange réactionnel préparé à partir de lessive d'alumine, acide silicique, solution de chlorure de sodium, solution d'hydroxyde de sodium et eau, et qui a la composition

$2,5 - 10\, Na_2O \cdot Al_2O_3 \cdot 15 - 35\, SiO_2$;

$40 - 4000\, H_2O, 5 - 30\, NaCl$,

en particulier,

$6,5\, Na_2O \cdot Al_2O_3, 30\, SiO_2, 1400\, H_2O, 20\, NaCl$,

jusqu'à la formation de cristaux, que l'on sépare, lave à l'eau et sèche le produit cristallisé.

KORNANALYSE
COULTER COUNTER

GEW.-%
DURCHGANG

100

50

50          100          150          200

KORNDURCHMESSER IN µm

*Fig. 1*

**Fig. 2**

# Fig. 3